# EUROPEAN PATENT SPECIFICATION

(11) **EP 4 421 748 B1**
(45) Date of publication and mention of the grant of the patent: **19.08.2026**
(21) Application number: 23157696.8
(22) Date of filing: 21.02.2023
(51) Int. Cl.: G06T 17/05, G06T 15/20, G06T 19/20

(54) **RENDERING OF A GEOSPATIAL SCENE**
DARSTELLUNG EINER GEOSPATIALEN SZENE
RENDU D'UNE SCÈNE GÉOSPATIALE

(43) Date of publication of application: 28.08.2024
(73) Proprietor: Luciad NV, 3001 Leuven (BE)
(72) Inventor: Schouteden, Joris, 3010 Kessel-Lo (BE)
(74) Representative: Ipsilon Belgium

(56) References cited:
- US-A1- 2014 267 273
- US-A1- 2020 082 611
- US-B2- 9 710 956
- ANONYMOUS: "Z-fighting - Wikipedia", WIKIPEDIA, 12 October 2022 (2022-10-12), XP093058196, Retrieved from the Internet <URL:https://en.wikipedia.org/wiki/Z-fighting> [retrieved on 20230627]
- OPENCASCADE: "Visualization -Open CASCADE Technology Documentation", 28 January 2023 (2023-01-28), XP093058287, Retrieved from the Internet <URL:https://web.archive.org/web/20231001000000*/https://dev.opencascade.org/doc/overview/html/occt_user_guides__visualization.html> [retrieved on 20230627]

## Description

### Technical Field

The invention relates to rendering a geospatial scene.

### Background

Geospatial imaging relates to the visualization of geospatial data. Geospatial data is information that describes objects, events or other features with a location on or near the surface of a planet, e.g. earth. Geospatial data contains location information, typically expressed in a spatial reference system, defining the location of such objects, events or other features. When visualizing geospatial data, the data is transformed to a two-dimensional, 2D, image. This transformation process is referred to as rendering and the resulting 2D image as a render or scene. Nowadays, rendering is almost always performed by a graphical processing unit, GPU, that performs the transformation steps by so-called shaders.

Geospatial data can be obtained from different sources that have overlapping models of the same objects. For example, a first dataset can be a street-level mesh generated from mobile lidar data. This first dataset then contains roads and building facades facing the roads. A second dataset can be a mesh generated from an aerial lidar data. This second dataset then contains the roofs and, depending on the angle, facades of the buildings. A third dataset can contain building volumes generated from cadastral data. Different datasets can show different features, e.g. colors, texture, windows, signs, at different levels of accuracy. When rendering an image from such geospatial data, it is not always certain from which dataset certain fragments will be generated. For example, the cadastral data may be off with respect to the mobile lidar data, such that an object in the final render will be generated from the cadastral data instead of the more accurate and preferred mobile lidar data. It may also happen that one dataset is more scattered than another such that an object in the final render will appear as a mixture of both datasets.

US 9710956 B2 discloses a map database that stores three-dimensional polygons of features, as well as water system polygons such as sea and lake and ground surface polygons. A procedure of displaying a three-dimensional map offsets the water systems relative to the ground surfaces, draws a map of a distant view area distant away from the viewpoint using map data at a low level of details, subsequently clears a depth buffer and newly draws a map of a close view area close to the viewpoint using map data at a high level of details. The offset is set to increase in the distant view area and decrease in the close view area. Increasing the offset in the distant view area avoids the occurrence of Z-fighting in the distant area from the viewpoint.

### Summary

The scope of protection sought for various embodiments of the invention is set out by the independent claims.

It is an object of the present disclosure to alleviate the above-described shortcomings and to provide a solution that can render geospatial data with different datasets in a more consistent and predictable way.

The embodiments and features described in this specification that do not fall within the scope of the independent claims, if any, are to be interpreted as examples useful for understanding various embodiments of the invention.

This object is achieved, according to a first example aspect , by a computer-implemented method for rendering a geospatial scene from a camera viewpoint comprising: i) obtaining geospatial data comprising at least a first and second geospatial dataset comprising 3-dimensional, 3D, models of objects in a spatial reference system; and ii) during the rendering, translating the first geospatial dataset with respect to the second geospatial dataset in the spatial reference system in a viewing direction such that faces of selected objects in the second geospatial dataset fall behind faces of the same selected objects in the first geospatial dataset.

In other words, the different geospatial datasets are offset with respect to each other in the spatial reference system. As a result, also the objects represented by both the first and second geospatial dataset are offset with respect to each other. As the translation is done in the viewing direction, objects in the second dataset will be positioned slightly further than the same objects in the first dataset. As the geospatial scene is rendered, by definition, from the viewing direction, this means that the visible faces of the objects in the first dataset will be used for the final render. If the first dataset is lacking a visible face or part of a visible face, then the face or part of the face in the second dataset will be used for the final render. As the translation is performed in the viewing direction, the applied offset will not be visible in the render of the geospatial scene thereby obtaining a fluent transition between portions of an object's face that is rendered from the first dataset and other portions of that object's face that is rendered from the second dataset.

It is an advantage of the disclosed method that the rendering of dataset can be prioritized over another dataset because the rendering of the first dataset in the geospatial scene will get priority over the second dataset. As such, the first dataset may be regarded or defined as the preferred dataset.

According to example embodiments, the method further comprises obtaining a geometric translation distance characterizing the performed translating.

In other words, the translating is characterized by a certain offset or distance specified with respect to the spatial reference system. The distance itself is an input to the method and may for example be obtained from a user, i.e. as a user input.

According to example embodiments the translating is performed by a shader. In other words, the translating is performed by configuring a shader such that it performs the desired translation. A shader is a computer program that can perform specific functions related to computer graphics. By a shader, positions or colours of pixels, vertices, and/or textures may be altered during the rendering of the scene. As such, a shader is used to translate the objects in the first dataset with respect to the objects in the second dataset. Such shader is sometimes also referred to as a vertex shader.

When the rendering involves a so-called depth-buffer or z-buffer, then the translating will have the effect that the location of the objects of the first and/or second dataset changes in this depth-buffer.

According to example embodiments, the rendering is performed by a graphics processing unit, GPU. The GPU is then specifically configured to perform the translating.

The rendering and thereby the translating may further be repeated when the camera viewpoint changes.

According to a second example aspect, a data processing apparatus comprising means for carrying out the method according to the first example aspect is disclosed.

According to a third example aspect, a computer program product comprising instructions which, when the program is executed by a computer, cause the computer to carry out the method according to the first example aspect is disclosed.

According to a fourth example aspect, a computer-readable storage medium comprising instructions which, when executed by a computer, cause the computer to carry out the method according to the first aspect is disclosed.

### Brief Description of the Drawings

Some example embodiments will now be described with reference to the accompanying drawings.
Fig. 1 shows a rendering pipeline according to an example embodiment;
Fig. 2 illustrates the rendering of a scene based on two datasets according to an example embodiment;
Fig. 3 shows an example embodiment of a suitable computing system for performing one or several steps in embodiments of the invention.

### Detailed Description of Embodiment(s)

Aspects of the present disclosure relate to the rendering of a geospatial scene from a certain camera viewpoint based on geospatial data comprising three-dimensional, 3D, models of objects in a spatial reference system. Geospatial data is information that describes objects, events or other features with a location on or near the surface of a planet, e.g. earth. The geospatial data contains location information expressed in a spatial reference system, defining the location of such objects, events or other features. Geospatial data may also be referred to as georeferenced data or geodata.

A spatial or coordinate reference system allows defining locations on or near the surface of the Earth by coordinates. Different spatial reference systems are known such as for example Universal Transverse Mercator, UTM, and State Plane Coordinate System, SPCS.

Rendering of a geospatial scene refers to the process wherein a two-dimensional, 2-D, image is created from geospatial data from a certain viewpoint and in a certain viewing direction within the geospatial reference system.

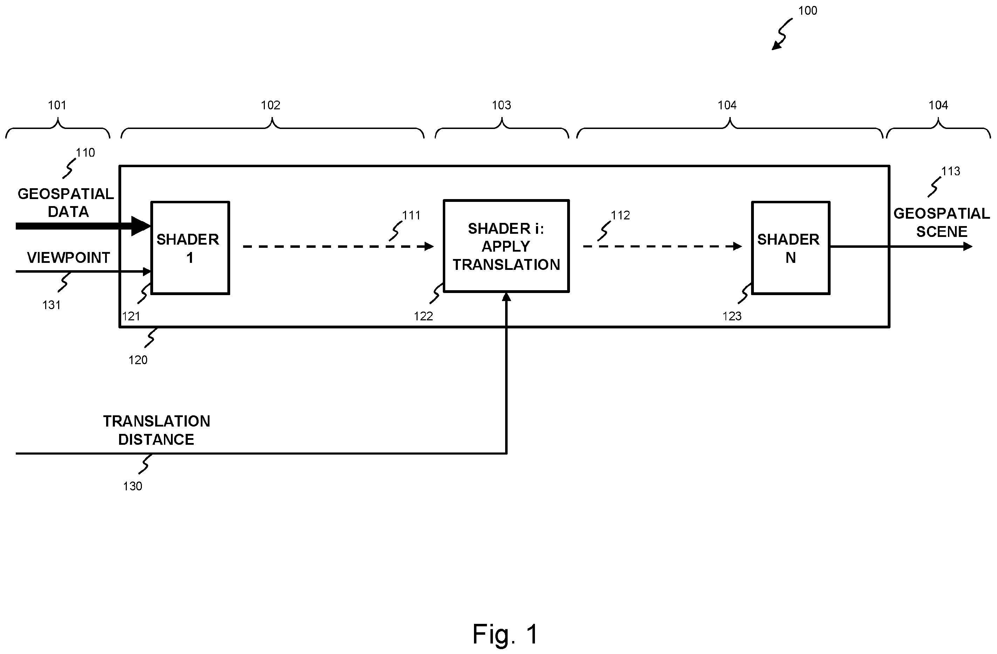

Fig. 1 illustrates a rendering process 100 of such a geospatial scene 113 as output 104 from geospatial data 110 serving as input 101. The geospatial data 110 contains different datasets wherein a respective dataset refers to geospatial data that is obtained from a data source.

A dataset may for example represent a mesh generated from mobile lidar data. Lidar, LIDAR, LiDAR, or LADAR is an acronym of 'light detection and ranging' or 'laser imaging, detection, and ranging'. Lidar is a technology allowing determining ranges by targeting an object or a surface with a laser source and measuring the time for the reflected light to return to the receiver. A lidar may be mounted on a vehicle that traverses around an area of interest thereby obtaining a street-level mesh as dataset than contains a representation of all surfaces within the view range of the lidar. Similarly, such a lidar may be equipped on an aerial device such as a drone thereby obtaining an aerial-level mesh as dataset. A street-level mesh will typically contain high resolution representations of facades of buildings and other objects that are facing the road but lack representations of the horizontal portions of such objects such as roofs. An aerial mesh will typically contain a good representation of these horizontal portions but lack accurate vertical representations.

Another type of dataset is cadastral information, also referred to as a cadastral map, which typically provides two-dimensional information on dimensions of land parcels, buildings, roads, and other structures. A cadastral map may also convey three-dimensional information, for example by also incorporating height information of objects thereby providing a three-dimensional representation or at least information to derive such a representation of objects located within the spatial reference system.

The rendering process 100 takes as input 101 at least two of such datasets 110 covering a certain geographical area within the spatial reference system. Such an area may comprise a street, a plurality of streets, a neighbourhood, a village, a city, and the like. Certain objects in the geographical area may be represented in each of the datasets 110. For example, a building may be represented by its floorplan in a cadastral map, and by its street facing faces in a street-mesh. The rendering process 100 takes further as input 101 a camera viewpoint 131. This camera viewpoint 131 comprises a viewing location and viewing direction within the spatial reference system from where the geospatial scene is to be rendered.

According to example embodiments, the rendering process 100 is performed by a rendering pipeline 120, sometimes also referred to as a computer graphics pipeline, or graphics pipeline. Such a pipeline is a consecutive sequence of graphics operations 102, 103, 104 that needs to be performed to render the geospatial scene 113 as output 104. Such operations may include a camera transformation, a projection step, lighting, clipping, window-viewport transformation, and rasterization.

The rendering process may be performed by a general-purpose processor, CPU, wherein the specific operations 102-104 are encoded as a computer program that is executed on the CPU.

The rendering process 100 may also be performed by a graphics processing unit, GPU. A GPU is an electronic circuitry that is specifically designed for rendering images from input data. Some of the operations in the rendering process 100 may be hardcoded in such a GPU while other operations may be configurable. The configuration of a GPU may also be done in the form of computer program having dedicated instructions that are executed on the GPU. As described below, embodiments of the present disclose foresee in a specific translation operation 103 and configurable translation distance 130. As such, the described functionality may be applied to existing GPU systems in the form of a dedicated computer program that makes the GPU to perform this functionality when executing the computer program. An operation within a graphics pipeline 100 is sometimes referred to as a shader or shader program. The different operations 121-123, including translation operation 122, as depicted in Fig. 1 may therefore also be referred to as shaders 121-123. Shaders that perform operations on objects within the datasets are sometimes referred to as vertex shaders. For example, the below described translation operation 122 can also be described as a vertex shader.

The same objects within the different data sets 110, i.e. models of the objects within the spatial reference system, would ideally appear at the exact same location in the spatial reference system. In reality, this will not be the case. A face of an object in one dataset may appear in front of the same face represented in the other dataset. The order of appearance will depend on the camera viewpoint. From one viewpoint, objects in a first dataset may appear in front of the same objects in a second dataset while from another viewpoint the objects in second dataset will appear in front of the same objects in the first dataset. In some situations, parts of an object will be not represented in one of the data sets. As a result, the output render 113 will show a certain object as a combination of points derived from the first and second dataset. Also, in some other situations, an object representation may have a coarse accuracy in one dataset such that points within the same plain in the object will not be represented within the same plain in this dataset. For example, the face of a building may appear as a jagged surface in a first dataset. The resulting output render 113 may then show a selection of points from this first dataset while others will be invisible because they fall behind a plain represented by a second dataset. Such way of rendering images may be undesirable.

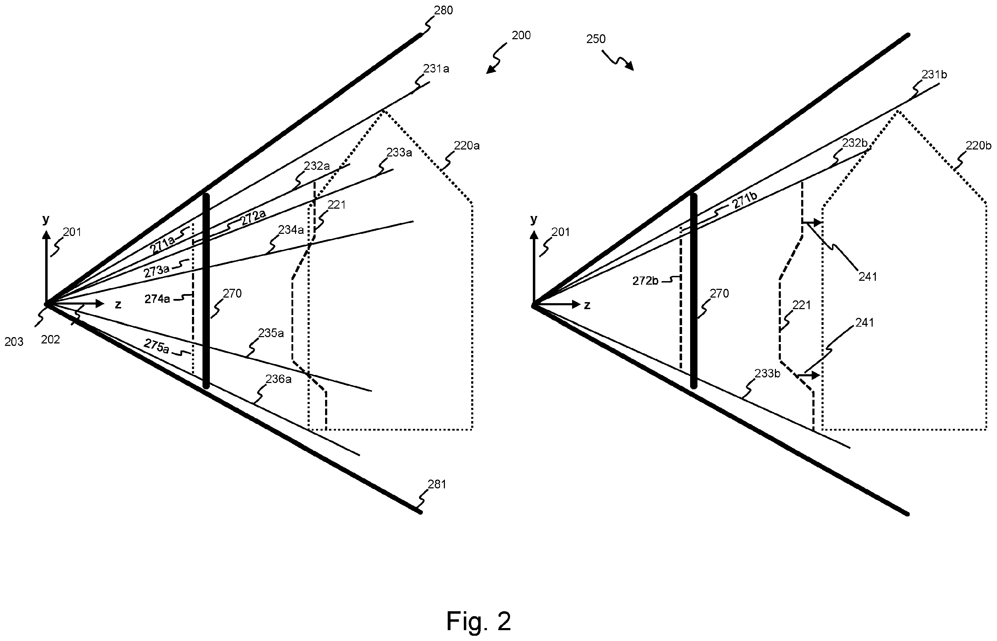

Fig. 2 illustrates this situation in a rendering example 200. Example 200 shows how an object is rendered in an image 270 from a viewpoint 203. The viewing direction is shown by the z-axis 202. The two lines 280, 281 originating from the viewpoint 203 define the viewing cone. Perpendicular to the z-direction 202 is the y-axis 201 thereby defining a 2-dimensional space. This 2D space is used for describing the principles of the 3D rendering pipeline 100. The dotted line 220a represents the contour of an object as obtained from a first geospatial dataset. The dashed line 221 represents the front face of the same object as obtained from a second geospatial dataset. The front face 221 is less accurate in the z-direction 202 such that it intersects with the contour 220a in different locations. During the rendering process the objects within the viewing cone are projected onto the image 270 according to projection lines from the viewpoint. Some of these projection lines are shown in example 200 as solid lines 231a, 232a, 233a, 234a, 235a, and 236a. When projected, portions 271a, 273a and 275a of the face 221 will be rendered in the image 270. Further, portions 272a and 274a of contour 220a will also be rendered in the image 270. As a result, the object represented by contour 220a and face 221 will appear in the rendered image as a sequence of alternating portions 271a to 275a from the respective first and second dataset. Which portion appears in the final render 270 is determined by the accuracy of the datasets. For example, face 221 might represent a vertical flat face but appear jagged due to the inaccuracy of the source that generated the dataset, e.g. a lidar system.

To overcome this shortcoming, a translation operation 122 is introduced in the rendering process 100. This operation 122 takes a translation distance 130 as input and applies this translation to a selected one of the datasets of the processed geospatial data 111. The translation distance 130 may be specified in units of the spatial reference system, e.g. in millimetres, centimetres, and meters. In other words, the translation distance may be a geometric distance. When the translation distance 130 is applied, the resulting data 112 is provided to the next stage in the rendering pipeline. The translation distance 130 is applied to the selected dataset in the viewing direction such that the selected dataset is translated with respect to the other dataset or datasets. As a result, the selected dataset will be moved further away from or closer to the viewpoint.

As the translation operation 122 has the effect that certain objects are moved according to the viewing directions, the operation will have the effect that they are moved in the z- or depth-buffer.

The result of this translation operation 122 is illustrated in rendering example 250 that depicts the rendering process as illustrated in example 200 with the difference that a translation distance 241 is applied to the dataset that contains the contour 220b. As a result of this translation, the face 221 from the other dataset is now completely in front of the contour 220. When projecting the face 221 and the translated contour 220b onto the image 270, the resulting render will comprise a first portion 272b from the face 221 and a second portion from the contour 220b. As such, the face 221 get priority over the contour 220b in the rendered image 270, or the first dataset having face 221 gets priority over the second dataset having contour 220b. Only when the first dataset has no data for a portion of the object, then this portion will be rendered based on the second dataset as is the case for the rendered portion 271b. In general, when performing the translating operation 122, the faces of selected objects in one geospatial dataset will fall behind faces of the same selected objects in another geospatial dataset. Typically, the dataset that is moved in front of the other dataset will be a preferred dataset.

Returning to the rendering process 100 of Fig. 1, after the translation operation 112, further operations may be performed on the processed data 112 such as for example lighting and shadows based on sun position, before obtaining the rendered geospatial scene.

According to example embodiments, the translation distance 130 may be obtainable from a user. When a user prefers a certain dataset over another one, i.e. has a preferred dataset, the user may move the datasets with respect to each other by inputting a certain translation distance. The user input may also be provided in an interactive way wherein first a geospatial scene rendered. The user evaluates the render scene 113 and based on the render determines and inputs a translation distance. Thereupon, the geospatial scene 113 is rendered again. This process may be repeated until the user is satisfied with the rendered scene, i.e. until the preferred dataset is actually rendered in favour of other datasets.

A user may also change the viewpoint 131 upon which the scene 113 will be rendered again, i.e. the rendering is repeated for a changing camera viewpoint. When the translation distance stays unchanged, then the translation distance will be taken into account by the translation operation 122 in the updated viewing direction. As a result, once the translation distance is correctly configured, e.g. by the user, the rendered scenes will always display the preferred dataset.

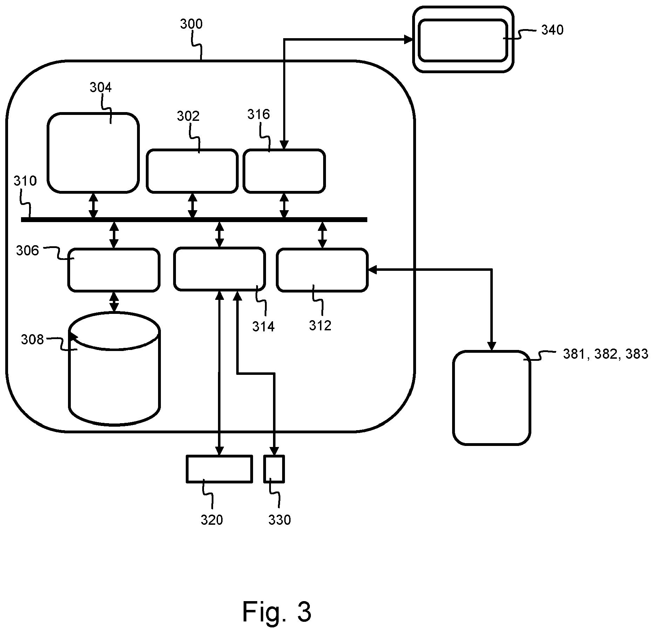

Fig. 3 shows a suitable computing system 300 for implementing rendering process 100. Computing system 300 may in general be formed as a suitable general-purpose computer and comprise a bus 310, a processor 302, a local memory 304, one or more optional input interfaces 314, one or more optional output interfaces 316, a communication interface 312, a storage element interface 306, and one or more storage elements 308. Bus 310 may comprise one or more conductors that permit communication among the components of the computing system 300. Processor 302 may include any type of conventional processor or microprocessor that interprets and executes programming instructions. Local memory 304 may include a random-access memory (RAM) or another type of dynamic storage device that stores information and instructions for execution by processor 302 and/or a read only memory (ROM) or another type of static storage device that stores static information and instructions for use by processor 302. Input interface 314 may comprise one or more conventional mechanisms that permit an operator or user to input information to the computing device 300, such as a keyboard 320, a mouse 330, a pen, voice recognition and/or biometric mechanisms, a camera, etc. Output interface 316 may comprise one or more conventional mechanisms that output information to the operator or user, such as a display 340, etc. Communication interface 312 may comprise any transceiver-like mechanism such as for example one or more Ethernet interfaces that enables computing system 300 to communicate with other devices and/or systems. The communication interface 312 of computing system 300 may be connected to such another computing system by means of a local area network (LAN) or a wide area network (WAN) such as for example the internet. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage element(s) 308 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for rendering a geospatial scene (113, 270) from a camera viewpoint (131, 203) comprising:
- obtaining (101) geospatial data (110) comprising at least a first and second geospatial dataset comprising 3-dimensional, 3D, models (220a, 221) of objects in a spatial reference system;
- during the rendering, translating (103) the first geospatial dataset with respect to the second geospatial dataset in the spatial reference system in a viewing direction (202) such that faces of selected objects in the second geospatial dataset fall behind faces of the same selected objects in the first geospatial dataset.

2. The method according to claim 1 wherein the first geospatial dataset is a preferred dataset for rendering the 3D objects in the geospatial scene.

3. The method according to claim 1 or 2 further comprising obtaining a geometric translation distance (130) characterizing the performed translating.

4. The method according to claim 3 wherein the translation distance is obtained from a user input.

5. The method according to any one of the preceding claims wherein the translating is performed by a shader (122).

6. The method according to any one of the preceding claims wherein the translating is performed by a vertex shader (122).

7. The method according to claim 5 or 6 wherein the translating is performed such that a location of the objects of the first and/or second dataset changes in a depth-buffer.

8. The method according to any one of the preceding claims wherein the rendering is performed by a graphics processing unit, GPU.

9. The method according to any one of the preceding claims wherein the rendering is repeated for a changing camera viewpoint.

10. A data processing apparatus comprising means for carrying out the method according to any one of claims 1 to 9.

11. A computer program product comprising instructions which, when the program is executed by a computer, cause the computer to carry out the method according to any one of claims 1 to 9.

12. A computer-readable storage medium comprising instructions which, when executed by a computer, cause the computer to carry out the method according to any one of claims 1 to 9.

## Patentansprüche

1. Computerimplementiertes Verfahren zur Darstellung einer georäumlichen Szene (113, 270) aus einer Kameraperspektive (131, 203), umfassend:
- Erlangen (101) von georäumlichen Daten (110), die mindestens einen ersten und einen zweiten georäumlichen Datensatz umfassen, die 3-dimensionale Modelle, 3D-Modelle, (220a, 221) von Objekten in einem räumlichen Bezugssystem umfassen;
- während der Darstellung Verschieben (103) des ersten georäumlichen Datensatzes in Bezug auf den zweiten georäumlichen Datensatz in dem räumlichen Bezugssystem in einer Betrachtungsrichtung (202) derart, dass Flächen ausgewählter Objekte in dem zweiten georäumlichen Datensatz hinter Flächen der gleichen ausgewählten Objekte in dem ersten georäumlichen Datensatz fallen.

2. Verfahren nach Anspruch 1, wobei der erste georäumliche Datensatz ein bevorzugter Datensatz zur Darstellung der 3D-Objekte in der georäumlichen Szene ist.

3. Verfahren nach Anspruch 1 oder 2, ferner umfassend Erlangen einer geometrischen Verschiebungsstrecke (130), die das durchgeführte Verschieben charakterisiert.

4. Verfahren nach Anspruch 3, wobei die Verschiebungsstrecke aus einer Benutzereingabe erlangt wird.

5. Verfahren nach einem der vorhergehenden Ansprüche, wobei das Verschieben durch einen Shader (122) durchgeführt wird.

6. Verfahren nach einem der vorhergehenden Ansprüche, wobei das Verschieben durch einen Vertex-Shader (122) durchgeführt wird.

7. Verfahren nach Anspruch 5 oder 6, wobei das Verschieben derart durchgeführt wird, dass sich eine Lage der Objekte des ersten und/oder des zweiten Datensatzes in einem Tiefenpuffer ändert.

8. Verfahren nach einem der vorhergehenden Ansprüche, wobei die Darstellung durch eine Grafikverarbeitungseinheit, GPU, durchgeführt wird.

9. Verfahren nach einem der vorhergehenden Ansprüche, wobei die Darstellung für eine sich ändernde Kameraperspektive wiederholt wird.

10. Datenverarbeitungseinrichtung, die Mittel zum Umsetzen des Verfahrens nach einem der Ansprüche 1 bis 9 umfasst.

11. Computerprogrammprodukt, das Anweisungen umfasst, die, wenn das Programm durch einen Computer ausgeführt wird, den Computer dazu veranlassen, das Verfahren nach einem der Ansprüche 1 bis 9 umzusetzen.

12. Computerlesbares Speichermedium, das Anweisungen umfasst, die, wenn sie durch einen Computer ausgeführt werden, den Computer dazu veranlassen, das Verfahren nach einem der Ansprüche 1 bis 9 umzusetzen.

## Revendications

1. Procédé mis en œuvre par ordinateur permettant le rendu d'une scène géospatiale (113, 270) à partir d'un point de vue de caméra (131, 203) comprenant :
- l'obtention (101) de données géospatiales (110) comprenant au moins un premier et un second ensemble de données géospatiales comprenant des modèles tridimensionnels, 3D (220a, 221) d'objets dans un système de référence spatiale ;
- durant le rendu, la translation (103) du premier ensemble de données géospatiales par rapport au second ensemble de données géospatiales dans le système de référence spatiale dans une direction de visualisation (202) de sorte que les faces des objets sélectionnés dans le second ensemble de données géospatiales tombent derrière les faces des mêmes objets sélectionnés dans le premier ensemble de données géospatiales.

2. Procédé selon la revendication 1, ledit premier ensemble de données géospatiales étant un ensemble de données préféré pour le rendu des objets 3D dans la scène géospatiale.

3. Procédé selon la revendication 1 ou 2, comprenant en outre l'obtention d'une distance de translation géométrique (130) caractérisant la translation réalisée.

4. Procédé selon la revendication 3, ladite distance de translation étant obtenue à partir d'une entrée utilisateur.

5. Procédé selon l'une quelconque des revendications précédentes, ladite translation étant réalisée par un nuanceur (122).

6. Procédé selon l'une quelconque des revendications précédentes, ladite translation étant réalisée par un nuanceur de sommets (122).

7. Procédé selon la revendication 5 ou 6, ladite translation étant réalisée de sorte qu'un emplacement des objets des premier et/ou second ensembles de données change dans un tampon de profondeur.

8. Procédé selon l'une quelconque des revendications précédentes, ledit rendu étant réalisé par une unité de traitement graphique, GPU.

9. Procédé selon l'une quelconque des revendications précédentes, ledit rendu étant répété pour un point de vue de caméra changeant.

10. Appareil de traitement de données comprenant un moyen pour effectuer le procédé selon l'une quelconque des revendications 1 à 9.

11. Produit-programme informatique comprenant des instructions qui, lorsque le programme est exécuté par un ordinateur, amènent l'ordinateur à effectuer le procédé selon l'une quelconque des revendications 1 à 9.

12. Support de stockage lisible par ordinateur comprenant des instructions qui, lorsqu'elles sont exécutées par un ordinateur, amènent l'ordinateur à effectuer le procédé selon l'une quelconque des revendications 1 à 9.
